**Europäisches Patentamt**

**European Patent Office**

**Office européen des brevets**

(19)

(11) Veröffentlichungsnummer: **0 563 722 A1**

# (12) EUROPÄISCHE PATENTANMELDUNG

(21) Anmeldenummer: **93104623.9**

(22) Anmeldetag: **20.03.93**

(51) Int. Cl.5: **B26F 3/08**, B26D 1/00, B26D 7/00

(30) Priorität: **03.04.92 DE 9204565 U**

(43) Veröffentlichungstag der Anmeldung:
**06.10.93 Patentblatt 93/40**

(84) Benannte Vertragsstaaten:
**AT BE CH DE DK ES FR GB IT LI NL SE**

(71) Anmelder: **RÖHM GMBH**
**Kirschenallee**
**D-64293 Darmstadt(DE)**

(72) Erfinder: **Emmerich, Friedel**
**Weinbergstrasse 29a**
**W-6104 Seeheim-Jugenheim(DE)**
Erfinder: **Hartmann, Heinrich**
**In der Aue 17a**
**W-6101 Reichelsheim(DE)**

(54) **Vorrichtung zum Längsschneiden von Hohlkammerprofilplatten.**

(57) Die Erfindung betrifft eine Vorrichtung zum Schneiden von Hohlkammerprofilplatten, wobei beim Schneiden die Hohlkammern und die Abschlußkanten erhalten bleiben und das Schneidemesser zwei parallele Schneiden (3) aufweist und beheizbar ist. Das Schneidemesser kann U-förmig ausgebildet sein und beidseitig einen zum Schneiden befähigten Schliff aufweisen, wobei sich zwischen den Schenkeln des U-förmigen Schneidemessers ein Führungsschuh (4) als Distanzhalter befindet. Vorzugsweise gleichen sich der Abstand der Schenkel des U-förmigen Schneidemessers und die Breite einer Kammer der Hohlkammerprofilplatte.

Fig. 1:

EP 0 563 722 A1

Rank Xerox (UK) Business Services
(3.10/3.6/3.3.1)

## Gegenstand der Erfindung

Die Erfindung betrifft eine Vorrichtung zum Längsschneiden von Hohlkammerprofilplatten, wobei beim Schneiden die Hohlkammern und die Abschlußkanten erhalten bleiben und wobei das Schneidemesser beheizbar ist.

## Stand der Technik

Bei der Herstellung von Hohlkammerprofilplatten, wie beispielsweise Stegdoppelplatten, besteht der Wunsch nach unterschiedlichen Formaten. Bei der Extrusion von Hohlkammerprofilplatten aus Kunststoffen, wie beispielsweise Polymethylmethacrylat oder Polycarbonat, ist dies normalerweise mit einem aufwendigen Wechsel der Extrusionsdüse oder dem Betreiben mehrerer Extruder mit unterschiedlicher Düsengröße verbunden.

Die für das Schneiden von Kunststoffplatten häufig verwendeten Schlagscheren haben beim Zuschneiden von Hohlkammerprofilplatten den Nachteil, daß die Hohlkammern durch die Schere zusammengedrückt werden und dadurch drastische Veränderungen im Profil resultieren. Auch bei der Verwendung von Messern mit Raumtemperatur sind trotz sehr kleiner Schneidegeschwindigkeiten erhebliche Deformationen der Hohlkammerprofilplatten festzustellen.

In DE-A 24 54 919 (= US 3 978 749) wird eine Schneidevorrichtung für beschichtete Platten beschrieben, die einen Auflagetisch mit in einem Rahmen angeordnete Deckplatten aufweist. Längs der Innenseite einer ortsfest mit dem Rahmen verbundenen Deckplatte ist ein elektrisch beheizbares Messer verfahrbar, das an einem geführten Schlitten befestigt ist. Der Hin- und Rücklauf des beheizbaren Schneidmessers ebenso wie dessen elektrische Beheizung wird durch eine Schaltungsanordnung gesteuert, wobei oberhalb des Schneidmessers ein verfahrbarer Absaugtrichter angeordnet ist. In EP 220 341 wird ein Verfahren zum Trennen von Stegplatten aus Kunststoffen beschrieben. Im wesentlichen verläuft der Trennvorgang quer zur Längserstreckung der Stegplattenhohlräume, insbesondere von frisch extrudierten und mit Stützluft im Inneren der Hohlräume der Stegplatte beaufschlagten Platten, wobei eine auf eine knapp über der Schmelztemperatur des Materials der Stegplatte liegende Temperatur erwärmte Schneide durch die Platte bewegt wird. Weiterhin wird eine Einrichtung zur Durchführung dieses Verfahrens, die eine Führung für ein antreibbares Trennelement aufweist, beansprucht, wobei das Trennelement als beheizbares Messer ausgebildet ist.

## Aufgabe und Lösung

Die in DE-A 24 54 919 und EP 220 341 beschriebenen Verfahren zum Schneiden von Kunststoffplatten bzw. zum Trennen von Stegplatten aus Kunststoffen eignen sich zwar zum Trennen von Hohlkammerprofilplatten, belassen aber nach dem Schneidevorgang deutlich überstehende Grate am Rand der Hohlkammerprofilplatte, was für eine bautechnische Verwendung und eine sichere Handhabung dieser Hohlkammerprofilplatten in vielen Fällen prohibitiv ist.

Die hieraus resultierende Aufgabe wird von der erfindungsgemäßen Vorrichtung zum Längsschneiden von Hohlkammerprofilplatten gelöst. Beim Schneiden bleiben hierbei die Hohlkammern und die Abschlußkanten der Hohlkammerprofilplatten erhalten. Das Schneidemesser weist zwei parallel geführte Schneiden auf und ist beheizbar. Es kann beidseitig mit einem zum Schneiden befähigten Schliff versehen sein. In weiteren Ausführungsformen der Erfindung ist das Schneidemesser U-förmig ausgebildet, wobei sich zwischen den Schenkeln ein Führungsschuh als Distanzhalter befindet und wobei der Abstand der Schenkel des U-förmigen Schneidemessers der Breite einer Kammer der Hohlkammerprofilplatte entspricht.

## Durchführung der Erfindung

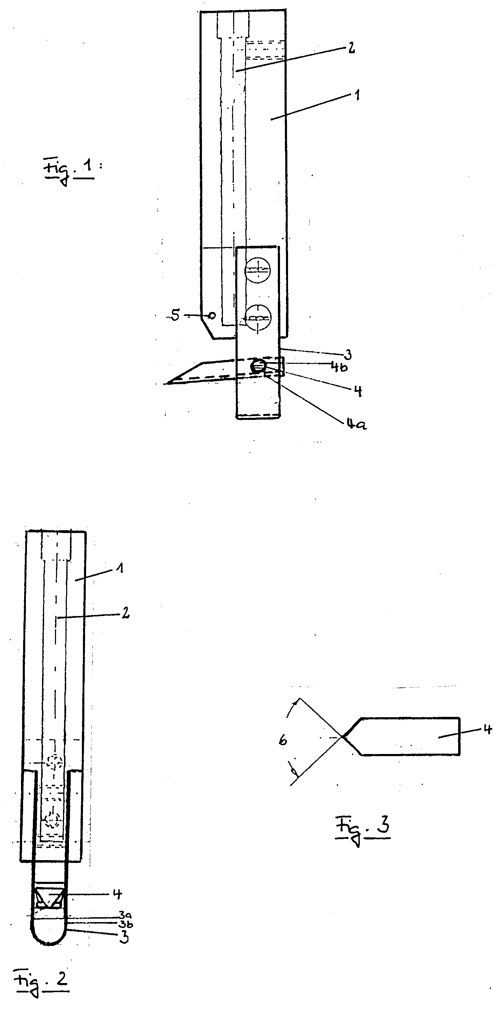

Bevorzugt werden Stegplatten als Hohlkammerprofilplatten in Längsrichtung der Stege mit der erfindungsgemäßen Vorrichtung auf erwünschte Formate zugeschnitten . Eine solche Schneidevorrichtung ist in Fig. 1 dargestellt. In einem massiven Halterelement (1), bestehend aus einem Material mit guter Wärmeleitfähigkeit und hoher Korrosionsfestigkeit, wie beispielsweise Metallen, vorzugsweise Messing oder Edelstahl, ist ein Heizelement (2), welches beispielsweise eine elektrische Widerstandsheizung, vorzugsweise eine Heizpatrone, sein kann, in engem Kontakt mit dem Halterelement (1) befestigt.

Am Halterelement (1) ist das U-förmige Schneidemesser (3) beidseitig mit Schrauben befestigt, wobei das Schneidemesser (3) in engen Kontakt mit dem Halterelement (1) tritt (Fig. 2 zeigt dies in der Vorderansicht). Zwischen den Schenkeln des U-förmigen Schneidemessers (3) ist achsengelagert ein Führungsschuh (4) als Distanzhalter angebracht, der das Schneidemesser (3) in Längsrichtung der Stegplatten führt. Das Schneidemesser (3) besteht vorzugsweise aus Messerstahl und weist einen beidseitigen Schliff (Fig. 3) mit einem Schliffwinkel (6) von weniger als 90 Grad auf. Sowohl Vorder- als auch Rückseite des Schneidemessers (3) können mit einem Schliff versehen sein. Das Schneidemesser (3) ist mit dem Heizelement (2) über das Halterelement (1) beheizbar, wobei die Temperatur über das Thermoelement (5) im Halterelement (1) aufgezeichnet wird. Beim Schneiden von Kunststoff-Stegplatten liegt die Messertemperatur im Bereich zwischen Raumtemperatur und Glasübergangstemperatur Tg des (amorphen) Kunststoffs, vorzugsweise im Bereich zwischen Tg - 30 K und Tg. In einer bevorzugten Ausführung der Erfindung entspricht der Abstand der Schenkel (Fig. 2, 3a und 3b) des U-förmigen Schneidemessers (3) genau dem Abstand der Stege der Stegplatte. Durch den Führungsschuh (4), der bevorzugt aus Messing mit einer Grundplatte (4a) aus Edelstahl aufgebaut ist und in Schneiderichtung spitz zuläuft, wird das Schneidemesser (3) beim Schneidevorgang immer genau an den Stegen entlanggeführt und damit ein überstehender Grat an der Schnittkante der Stegplatten vermieden. Durch die Achsenlagerung (4b) paßt sich der Führungsschuh (4) beim Schneidevorgang etwaigen Formungenauigkeiten der Stegplatte an.

In einer weiteren Ausführungsform der Erfindung ist der Führungsschuh (4) nach beiden Seiten spitz zulaufend ausgestaltet, so daß mit einem Schneidemesser (3), das einen Schliff auf Vorder- und Rückseite aufweist, der Schneidevorgang nach Durchlaufen einer Längsrichtung der Stegplatte sofort gegen die ursprüngliche Richtung an derselben oder einer weiteren Stegplatte fortgeführt werden kann (Hin- und Rücklauf).

In einer weiteren bevorzugten Ausführung der Erfindung wird die in Fig. 1 und 2 dargestellte Schneidevorrichtung über ein Antriebselement, wie beispielsweise einem angetriebenen Schlitten in einer Führung, in Längsrichtung der Stegplatten bewegt. Die abgeschnittenen Gurtstreifen werden hierbei in geeigneter Form, vorzugsweise durch Aufrollen, entfernt.

Vorteile der Erfindung

Mit der erfindungsgemäßen Vorrichtung ist es möglich, Hohlkammerprofile mit Grat-freien Abschlußkanten in jedem Format herzustellen.

Die Schneidevorrichtung kann bei der Extrusion von Hohlkammerprofilen, insbesondere von Stegplatten, In-Line direkt anschließend an die Kalibriereinrichtung eingesetzt werden.

Durch spezielle Ausgestaltungen von Schneidemesser (3) und Führungsschuh (4) kann die Schneidevorrichtung in Längsrichtung der Hohlkammerprofile vorwärts und rückwärts schneiden und muß somit nach dem Schneidevorgang nicht in die Ausgangsposition zurückgefahren werden.

Das Fehlen von Graten oder überstehenden Gurtteilen an den Schnittkanten von Stegplatten ermöglicht deren problemlosen Einsatz als Bauelemente unter Einhaltung aller Sicherheitsvorschriften ohne zusätzliche Schutzmaßnahmen (Kantenschutz).

Das folgende Beispiel soll die Erfindung erläutern.

BEISPIEL

Zuschnitt einer Stegdoppelplatte aus Polycarbonat

In Abhängigkeit der Messertemperatur ergaben sich folgende Werte für den Kraftaufwand beim Längsschneiden einer Stegdoppelplatte aus Polycarbonat mit 10 mm Stegabstand (= Abstand der Schenkel des beheizbaren U-förmigen Schneidemessers (3):

| | |
|---|---|
| **Bei Kaltschnitt im Randbereich** | **600 - 800 N** |
| **Bei Kaltschnitt im Mittelbereich** | **500 - 700 N** |
| **Bei 150 Grad C Reglereinstellung** | |
| **Messertemperatur-Mittelwert 130 Grad C** | **400 N** |
| **Bei 180 Grad C Reglereinstellung** | |
| **Messertemperatur-Mittelwert 140 Grad C** | **300 N** |
| **Bei 200 Grad C Reglereinstellung** | |
| **Messertemperatur-Mittelwert 150 Grad C** | **200 N** |

Diese Werte sind Mittelwerte und wurden anhand mehrerer Versuche ermittelt.
Ab einer Messertemperatur über 150 Grad C werden die Schnittkanten am oberen Gurt rauh.
Die erfindungsgemäße Längsschneidevorrichtung wurde im Dauereinsatz im In-Line-Extrusionsbetrieb erfolgreich erprobt.

**Patentansprüche**

1.  Vorrichtung zum Längsschneiden von Hohlkammerprofilplatten,
    dadurch gekennzeichnet,
    daß das Schneidemesser zwei parallele Schneiden aufweist und beheizbar ist, wobei beim Schneiden die Abschlußkanten der Hohlkammerprofilplatten erhalten bleiben.

2.  Vorrichtung nach Anspruch 1, dadurch gekennzeichnet, daß das Schneidemesser beidseitig mit einem zum Schneiden befähigten Schliff versehen ist.

3.  Vorrichtung nach den Ansprüchen 1 und 2, dadurch gekennzeichnet, daß die Hohlkammerprofilplatte beweglich und das Schneidemesser feststehend angeordnet ist.

4.  Vorrichtung nach den Ansprüchen 1 bis 3, dadurch gekennzeichnet, daß das Schneidemesser U-förmig ausgebildet ist.

5.  Vorrichtung nach den Ansprüchen 1 bis 4, dadurch gekennzeichnet, daß sich zwischen den Schenkeln des U-förmigen Schneidemessers ein Führungsschuh als Distanzhalter befindet.

6.  Vorrichtung nach den Ansprüchen 1 bis 5, dadurch gekennzeichnet, daß der Abstand der Schenkel des U-förmigen Schneidemessers der Breite einer Kammer der Hohlkammerprofilplatte entspricht.

7.  Vorrichtung gemäß den Ansprüchen 1 bis 6, dadurch gekennzeichnet, daß der Hin- und Rücklauf der Vorrichtung sowie die elektrische Beheizung des Schneidemessers durch eine Schaltungsanordnung gesteuert wird.

Fig. 1 :

2

1

5

3

4b

4

4a

Fig. 2

1

2

4

3a
3b
3

Fig. 3

6

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>Y | US-A-2 781 839 (BOCKRATH ET AL.)<br>* das ganze Dokument *<br>--- | 1,2,3,7<br>4,5,6 | B26F3/08<br>B26D1/00<br>B26D7/00 |
| Y | DE-A-3 744 576 (TOYODA GOSEI)<br>* Abbildungen 9,10 *<br>--- | 4 | |
| Y | FR-A-1 351 963 (FLAX)<br>* Seite 2, Absatz 2; Abbildungen 1-3 *<br>--- | 5,6 | |
| X | PATENT ABSTRACTS OF JAPAN<br>vol. 8, no. 253 (M-339)(1690) 20. November 1984<br>& JP-A-59 127 742 ( ASAHI KASEI KOGYO K.K. )<br>* Zusammenfassung *<br>--- | 1,2,3 | |
| X | GB-A-2 191 969 (JIN JONG CHOU)<br>* Abbildung 4 *<br>----- | 1,2 | |

RECHERCHIERTE SACHGEBIETE (Int. Cl.5)

B29C
B26F
B26D

Der vorliegende Recherchenbericht wurde für alle Patentansprüche erstellt

| Recherchenort | Abschlußdatum der Recherche | Prüfer |
|---|---|---|
| DEN HAAG | 06 JULI 1993 | SOZZI R. |

EPO FORM 1503 03.82 (P0403)